# EUROPEAN PATENT SPECIFICATION

(11) **EP 3 627 640 B1**
(45) Date of publication and mention of the grant of the patent: **17.11.2021**
(21) Application number: 17910474.0
(22) Date of filing: 16.05.2017
(51) Int. Cl.: H02B 11/04, H02B 11/12

(54) **DRAWER-TYPE CIRCUIT BREAKER**
LEISTUNGSSCHALTEREINSCHUB
DISJONCTEUR DÉBROCHABLE

(43) Date of publication of application: 25.03.2020
(73) Proprietor: Mitsubishi Electric Corporation, Chiyoda-ku Tokyo 100-8310 (JP)
(72) Inventor: KURATA Kouhei, Tokyo 102-0073 (JP)
(74) Representative: Diehl & Partner
(86) International application number: PCT/JP2017/018285
(87) International publication number: WO 2018/211579

(56) References cited:
- EP-A2- 0 557 586
- CN-Y- 201 298 685
- JP-A- H0 562 557
- JP-A- 2004 227 905
- JP-A- 2004 227 905
- JP-A- 2007 166 853
- JP-U- S6 122 112
- KR-A- 20090 062 631
- US-A- 5 025 121
- US-A- 5 343 355
- US-A1- 2009 257 857

## Description

### TECHNICAL FIELD

The present invention relates to a drawer-type circuit breaker including a circuit breaker and a terminal apparatus.

### BACKGROUND ART

A conventional terminal apparatus of a drawer-type circuit breaker is configured such that terminals and connectors for respective phases are sandwiched by insulation bases from the right and the left, and side plates (right and left) and angle members (upper and lower) are combined thereto so as to be fixed (see, for example, Patent Document 1). The side plates and the angle members form a drawer frame for drawing or inserting the circuit breaker.

As another example, an insulation base mounted so as to ensure insulation between terminals for respective phases may be formed in a box shape (see, for example, Patent Document 2).

Features of the preamble of independent claim 1 are disclosed by each document KR 10 2009 062631 A, CN 201298685 Y, JP 2004-227905 A and US5343355A. According to these prior art documents terminals and connectors for respective phases are sandwiched by insulation bases from the right and the left.

A primary disconnect assembly for a circuit breaker is disclosed by US 5,025,121. The assembly includes a plurality of contact fingers for engaging the terminals of a bus bar assembly. The terminals and fingers are configured such that the terminals each include depressions adapted to accept the contact portions of the contact fingers.

An electrical distribution device assembly including a drawout substructure having at least first and second opposing side portions is disclosed by US 2009/257857 A1. The electrical distribution device assembly also includes a telescoping rail unit mounted to one of the first and second opposing side portions. The telescoping rail unit includes a carrier rail having a carrier rail support surface and a loading rail having a loading rail support surface. The loading rail is slidably supported by the carrier rail to define an extended deployed configuration and a retracted stowed configuration. The electrical distribution device assembly also includes an electrical device is supported upon at least one of the carrier rail and the loading rail and is selectively shiftable into and out from the drawout substructure.

A sliding mechanism of a drawout type switchgear is disclosed by EP 0 557 586 A2. The drawout type switchgear has a first slide arm which is slidably supported by upper and lower support rails and a second slide arm which is slidably supported by the first slide arm. The second slide arm is interlocked with the first slide arm by a lock plate when the first slide arm is sliding from a connected position to a final drawout position of the first slide arm. When the first slide arm reaches the final drawout position of the first slide arm, the interlocked second slide arm is released by rotation of the lock plate.

### CITATION LIST

### PATENT DOCUMENT

Patent Document 1: Japanese Laid-Open Patent Publication No. 2009-55732
Patent Document 2: Japanese Laid-Open Patent Publication No. 11-250776

### SUMMARY OF THE INVENTION

### PROBLEMS TO BE SOLVED BY THE INVENTION

Such a conventional terminal apparatus of a drawer-type circuit breaker configured as described above has a problem that it is necessary to retain members until the right and left insulation bases are combined and then the side plates and the angle members are combined, during assembly. In addition, it is necessary to disassemble the drawer frame when conducting maintenance or replacement for the connectors, the terminals, and the insulation bases. Further, there is a problem that a dedicated insulation base is needed in the case of different product specifications.

The present invention has been made to solve the above problem, and an object of the present invention is to obtain a terminal apparatus of a drawer-type circuit breaker that facilitates assembling of the terminal apparatus.

### SOLUTION TO THE PROBLEMS

The above object is solved by the combination of features of independent claim 1. Preferred embodiments are defined in the dependent claim.

### EFFECT OF THE INVENTION

The drawer-type circuit breaker according to the present invention makes it possible to easily perform assembling of the terminal unit, maintenance therefor, and change of the number of phases thereof.

### BRIEF DESCRIPTION OF THE DRAWINGS

[FIG. 1] FIG. 1 is a perspective view showing a drawn state of a drawer-type circuit breaker according to embodiment 1 of the present invention.
[FIG. 2] FIG. 2 is a perspective view showing an inserted state of the drawer-type circuit breaker according to embodiment 1 of the present invention.
[FIG. 3] FIG. 3 is a back view showing attachment and detachment of terminal units of the drawer-type circuit breaker shown in FIG. 1.
[FIG. 4] FIG. 4 is an exploded perspective view of a terminal unit of the drawer-type circuit breaker according to embodiment 1 of the present invention.
[FIG. 5] FIG. 5 is an upper part sectional view of a terminal part in the state shown in FIG. 2.
[FIG. 6] FIG. 6 is an upper part sectional view of a terminal part in the state shown in FIG. 1.
[FIG. 7] FIG. 7 is an enlarged view showing the terminal unit in FIG. 6 in an enlarged manner.
[FIG. 8] FIG. 8 illustrates additional installation of a terminal unit according to embodiment 1 of the present invention.
[FIG. 9] FIG. 9 illustrates an example of change of a terminal conductor of a drawer-type circuit breaker according to embodiment 2 (not part of the present invention).
[FIG. 10] FIG. 10 illustrates another example of change of a terminal conductor of the drawer-type circuit breaker according to embodiment 2 (not part of the present invention).

### DESCRIPTION OF EMBODIMENTS

### Embodiment 1

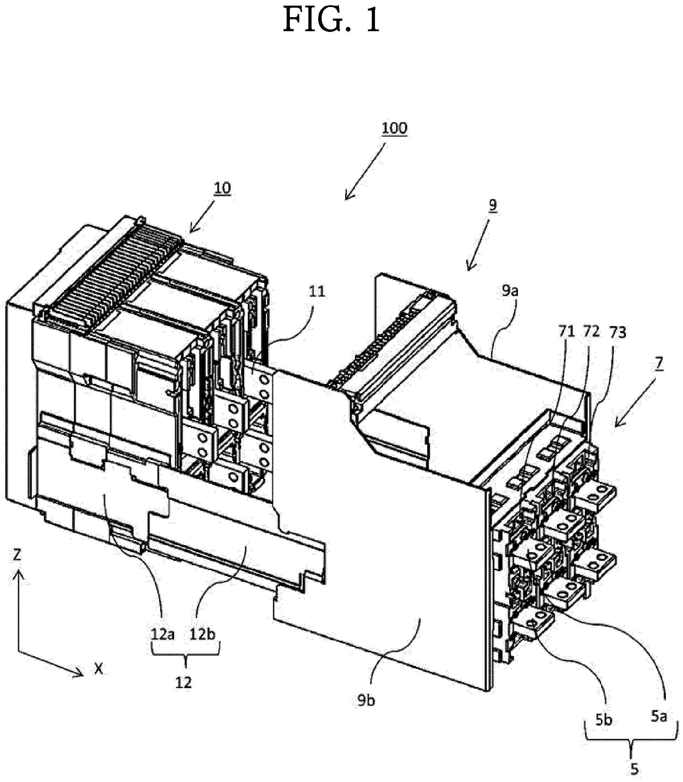

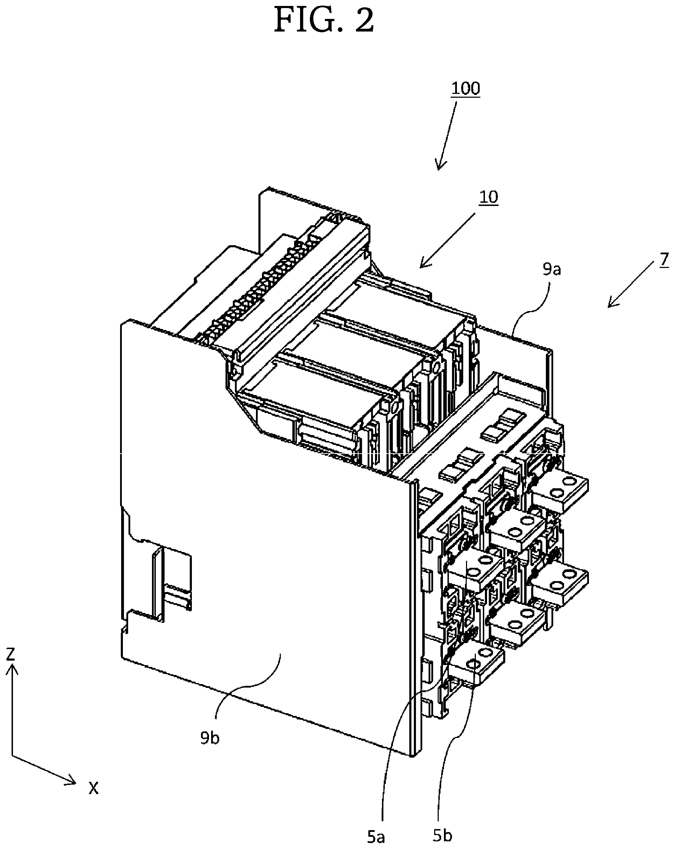

FIG. 1 is a perspective view showing a drawn state of a drawer-type circuit breaker according to embodiment 1 of the present invention, and FIG. 2 is a perspective view showing an inserted state of the drawer-type circuit breaker according to embodiment 1.

As shown in FIG. 1 and FIG. 2, a drawer-type circuit breaker 100 includes a drawer-type circuit breaker body 10, and, for example, is stored in a housing (not shown) of an enclosed switchboard so as to be able to be drawn. A terminal apparatus 7 is mounted to the back surface of the drawer-type circuit breaker 100. As is well known, the drawer-type circuit breaker body 10 includes a fixed contact and a movable contact, and is configured such that, through an operation of an operation handle (not shown) provided on the front side of the drawer-type circuit breaker body 10, the circuit is broken by the movable contact being separated from the fixed contact, and the circuit is closed by the movable contact being brought into contact with the fixed contact. In addition, when overcurrent flows through the circuit, the movable contact is automatically separated from the fixed contact by a tripping mechanism, whereby the circuit is broken.

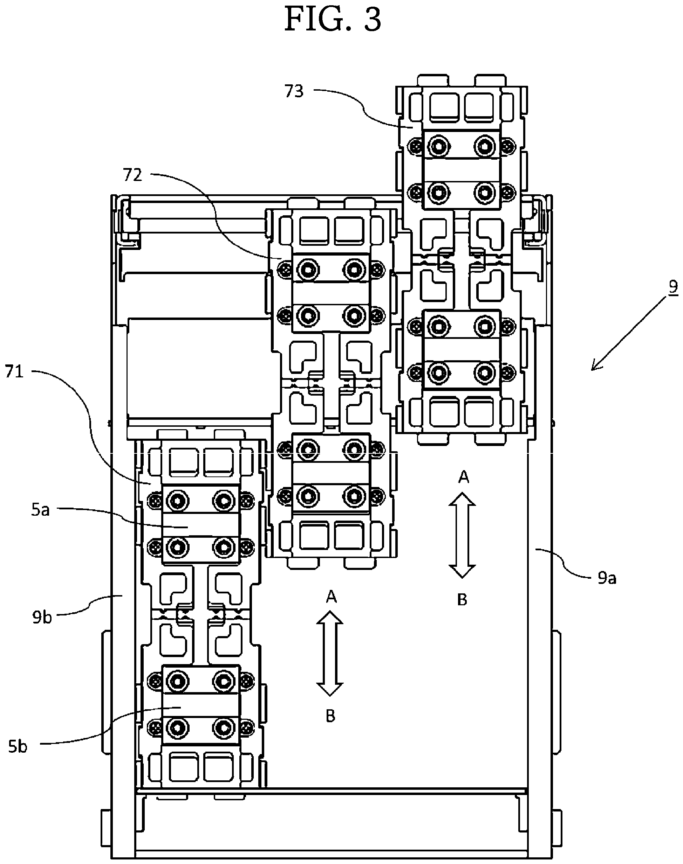

The terminal apparatus 7 includes terminal units 71, 72, 73 formed for respective phases. As shown in FIG. 3, at the time of arranging the terminal units 71, 72, 73 in a drawer frame 9, the terminal units 71, 72, 73 can be extracted and inserted in directions of arrows A and B, and after insertion, they are fixed between side plates 9a, 9b forming the drawer frame 9. Each of the terminal units 71, 72, 73 has terminal conductors 5 (input-side terminal conductor 5a and output-side terminal conductor 5b). When the terminal unit is stored in, for example, a housing of an enclosed switchboard, the input-side terminal conductor 5a is connected to a connection conductor (not shown) on the power supply side, and the output-side terminal conductor 5b is connected to a connection conductor (not shown) on the load side.

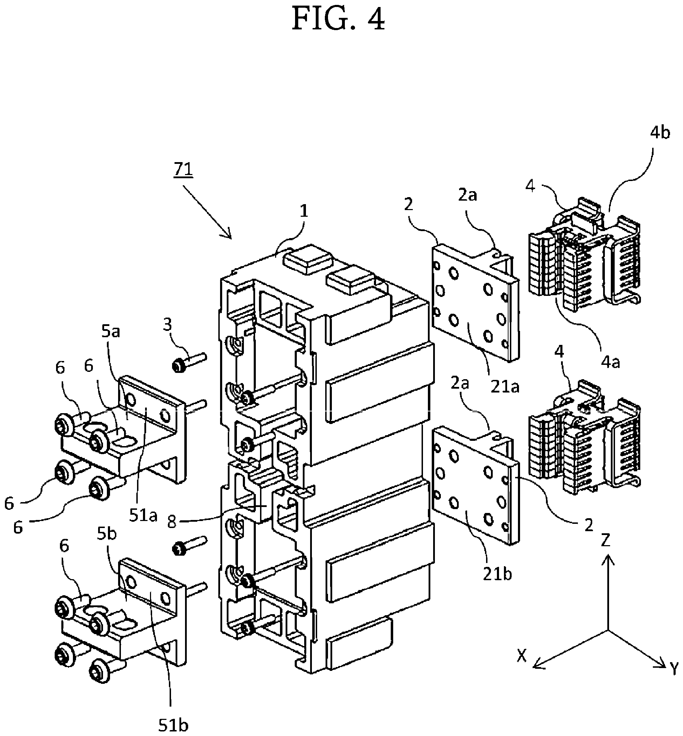

Circuit-breaker-side conductors 11 are mounted to the drawer-type circuit breaker body 10, and the drawer-type circuit breaker body 10 moves in an X axis direction via an extendable guide 12 provided to the drawer frame 9 by means of a drawer handle and a drawer mechanism (not shown) for extracting and inserting the circuit breaker body. Thus, the circuit-breaker-side conductors 11 are extracted from or inserted into connectors 4 (see FIG. 4) connected to the terminal conductors 5, whereby a function as the drawer-type circuit breaker 100 is exerted.

FIG. 4 is an exploded perspective view of the terminal unit 71. A relay terminal conductor 2 extending in the X axis direction from each of bottom portions 21a, 21b and having an end portion 2a formed in a Y shape is screwed by a small screw 3 into a screw hole formed in the surface of the insulation base 1. Then, each connector 4 disposed so as to allow the circuit-breaker-side conductor 11 to be fitted thereto in the Z axis direction is connected to the relay terminal conductor 2. The connection between the connector 4 and the relay terminal conductor 2 is made by inserting the Y-shaped end portion 2a of the relay terminal conductor 2 into a groove 4a of the connector 4. Members forming the end portion 2a and the groove 4a have elasticity, and thus, when the outer surface of the Y shape and the groove 4a are engaged with each other, the inner wall surface of the groove 4a and the outer surface of the Y shape are pressed to each other, whereby the engagement is strengthened. This engagement has a stopper function so as to prevent the relay terminal conductor 2 and the connector 4 from being detached from each other when the circuit-breaker-side conductor 11 is extracted. Further, at the time of inserting the circuit-breaker-side conductor 11, the connector 4 performs a swing movement, and the engagement surfaces of the end portion 2a and the groove 4a serve as a fulcrum for the swing movement.

An input-side terminal conductor 5a and an output-side terminal conductor 5b extend, from bottom portions 51a, 51b which spread in a Z-Y plane, in the X axis direction toward the side opposite to the end portions 2a described above, and terminal parts thereof are disposed in parallel to an X-Y plane. In the present embodiment 1, each of the bottom portions 51a, 51b has a square shape in which the four sides have equal lengths, and each terminal part is formed perpendicularly to the bottom portion 51a, 51b so as to include a line connecting the midpoints of the opposing sides of the square shape. The relay terminal conductor 2 and the terminal conductor 5 are integrally formed and inserted into the insulation base 1 so as to be fixed.

It is noted that the insulation base 1 has a groove 8, at a center part, between the input-side terminal conductor 5a and the output-side terminal conductor 5b, and the groove 8 is perpendicular to the input-side terminal conductor 5a and the output-side terminal conductor 5b and penetrates between the conductors. Thus, when the circuit-breaker-side conductors 11 are fitted to the connectors 4 in the Z axis direction, an air passage is formed between the upper and lower circuit-breaker-side conductors 11. Such a structure enables the terminal unit 71 to be cooled by natural convection.

The terminal units 72 and 73 are also formed in the same manner as the terminal unit 71. The relay terminal conductor 2 and the terminal conductor 5 are integrally formed and inserted into the insulation base 1 so as to be fixed.

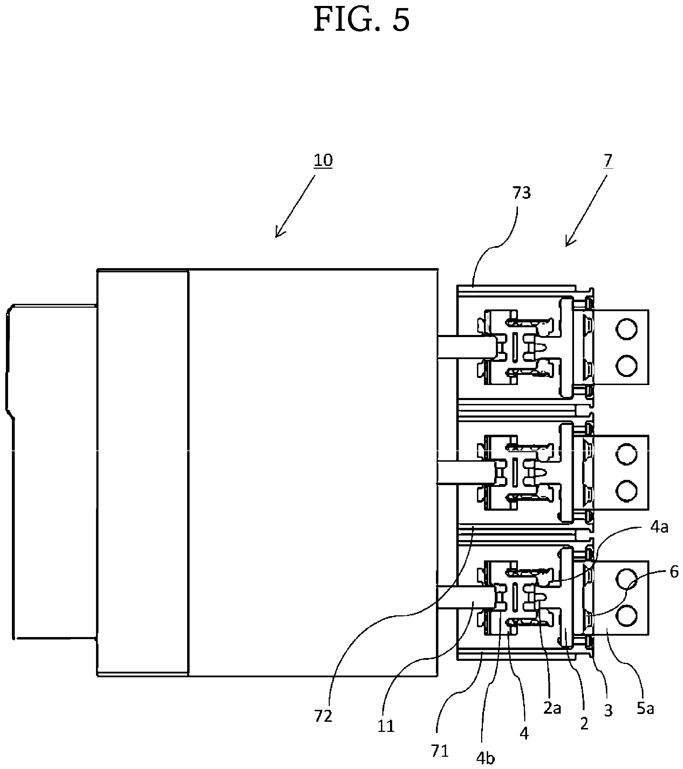

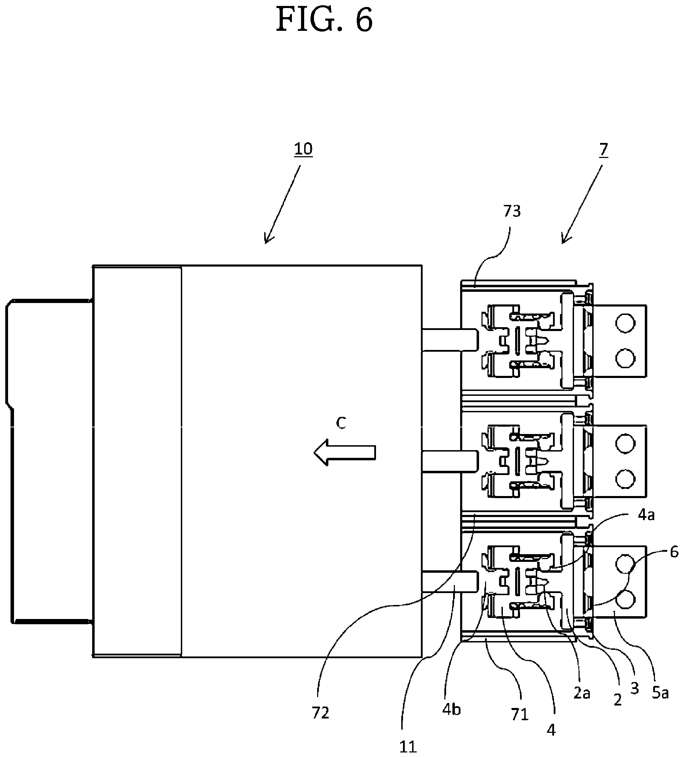

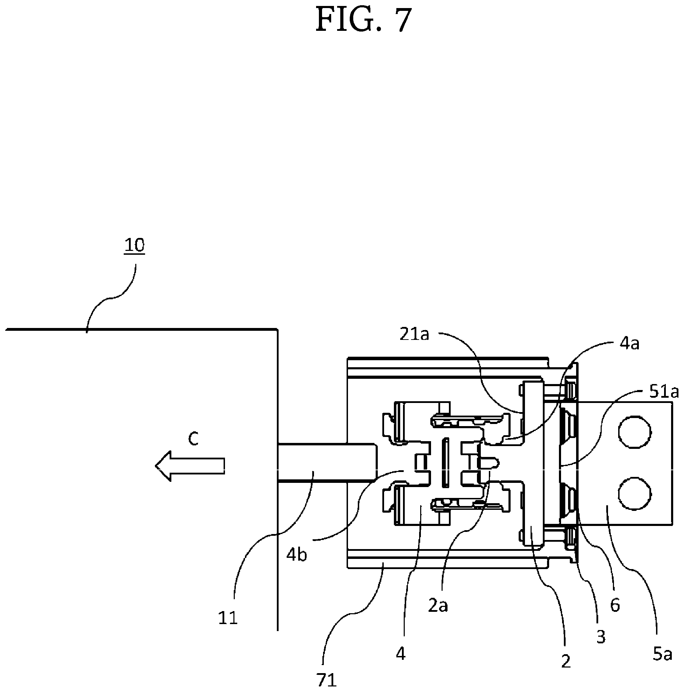

FIG. 5 is an upper part sectional view of the terminal apparatus 7 in the state shown in FIG. 2 in which the drawer-type circuit breaker body 10 is inserted into the drawer frame 9. FIG. 6 is an upper part sectional view of the terminal apparatus 7 in the state shown in FIG. 1 in which the drawer-type circuit breaker body 10 is drawn. FIG. 7 is an enlarged view of the terminal unit 71 shown in FIG. 6.

In FIG. 5, in the state in which the drawer-type circuit breaker body 10 is inserted into the drawer frame 9, the circuit-breaker-side conductors 11 are inserted into the groove 4b of the connectors 4. From this state, as shown in FIG. 6, when the drawer-type circuit breaker body 10 is moved in such a direction (direction of arrow C) as to be drawn from the drawer frame 9, the circuit-breaker-side conductors 11 are also drawn from the connectors 4. At this time, as shown in FIG. 7, each connector 4 is caught by the Y shape of the end portion 2a of the relay terminal conductor 2, so that the circuit-breaker-side conductor 11 is disengaged in a state in which the connector 4 is fitted to the relay terminal conductor 2. Then, the drawer-type circuit breaker body 10 is drawn via the guide 12 (members 12a, 12b) provided to the drawer-type circuit breaker body 10 and the drawer frame 9 (see FIG. 1).

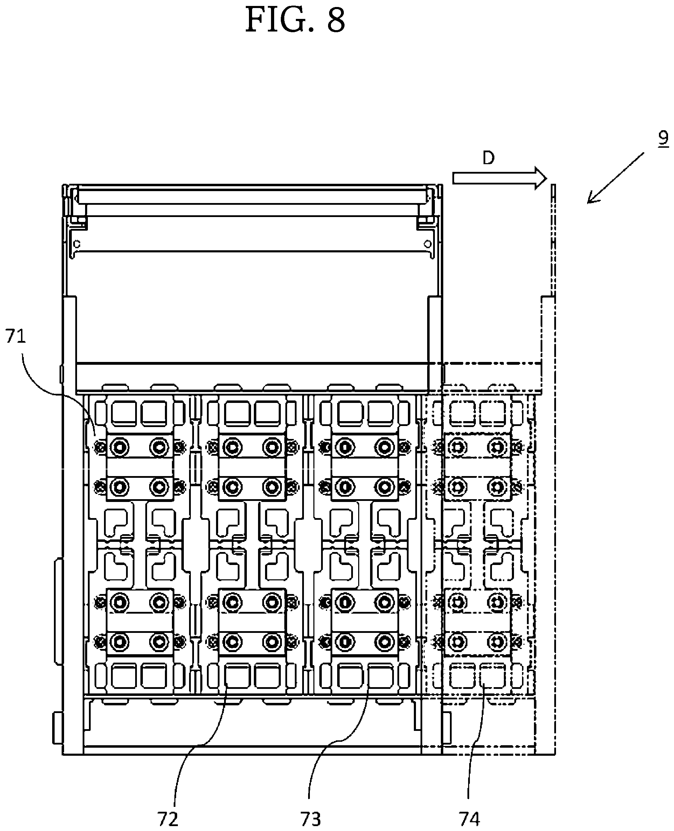

It is noted that, as shown in FIG. 8, a terminal unit 74 may be inserted by extending the drawer frame 9 for one more phase in the direction of arrow D. Thus, it is possible to easily perform additional installation.

As described above, in the present embodiment 1, the terminal apparatus 7 is composed of the terminal units 71, 72, 73, and the drawer-frame-side conductor composed of the terminal conductor 5 and the relay terminal conductor 2 is screwed to the screw holes formed in the surface of the insulation base 1 of each terminal unit 71, 72, 73. Therefore, during assembling, it is not necessary to retain members until right and left insulation bases are combined and then side plates and angle members are combined. Further, detachment of the drawer-frame-side conductor can be easily performed by screws, thus facilitating replacement thereof. In addition, the terminal units 71, 72, 73 can be easily inserted and attached into the drawer frame 9 or detached therefrom, and therefore it is not necessary to disassemble the drawer frame when performing maintenance or replacement for the connectors 4, the drawer-frame-side conductors and the insulation bases. In addition, additional installation of a terminal unit can be easily performed in accordance with the number of phases. In addition, since the terminal parts are formed by the terminal units 71, 72, 73 for individual phases, assembling and change of specifications can be simplified and at the time of maintenance, it is possible to perform maintenance on a phase-by-phase basis.

### Embodiment 2 (not part of the invention)

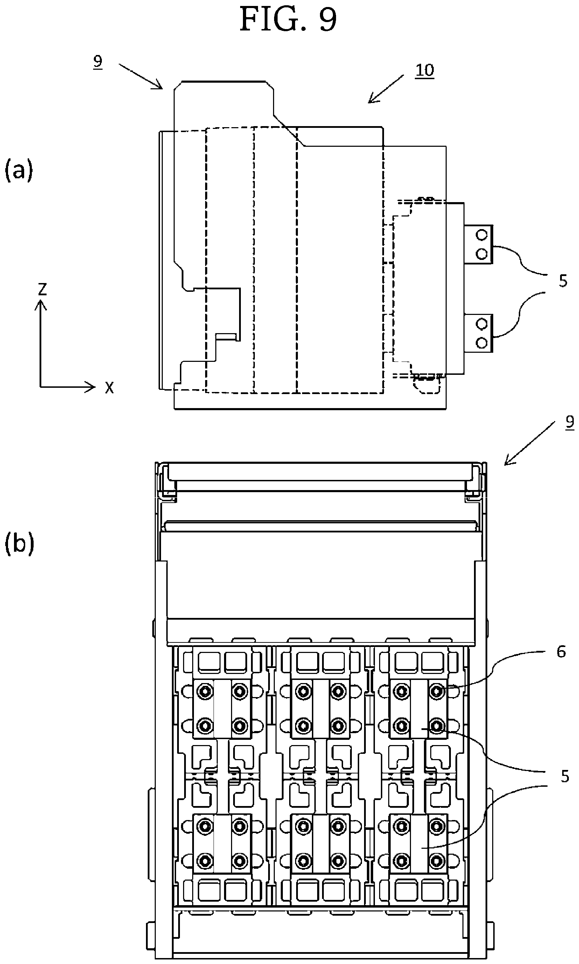

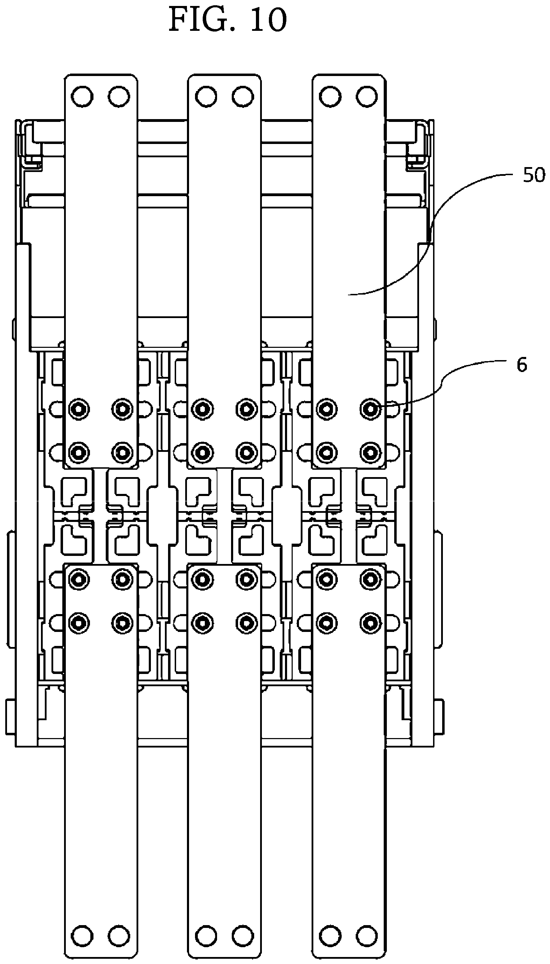

In embodiment 1, the terminal conductors 5 are disposed in parallel to the X-Y plane as shown in FIG. 4. Since the bottom portion 51a of each terminal conductor 5 has a square shape, in the present embodiment 2, as shown in FIG. 9, the bolts 6 are detached, the terminal conductor 5 is turned by 90 degrees, and the terminal conductor 5 is fixed again to the relay terminal conductor 2 by the bolts 6, whereby the connection direction of the terminal conductor 5 can be changed to be parallel to the X-Z plane. Here, FIG. 9(a) shows a side view of the drawer-type circuit breaker, and FIG. 9(b) shows a back view thereof. In addition, as shown in FIG. 10, if the terminal conductors are replaced with terminal conductors 50, it becomes possible to perform connection from the front side of the drawer-type circuit breaker 100.

As described above, in embodiment 2, which is not part of the present invention, the terminal conductors 5 are fixed by bolts to the relay terminal conductors 2 which are visible from outside of the insulation base 1, thus providing an effect that it is possible to easily select terminal specifications so as to enable bus bar wiring in accordance with the intended use.

### DESCRIPTION OF THE REFERENCE CHARACTERS

1 insulation base
2 relay terminal conductor
3 small screw
4 connector
5, 50 terminal conductor
6 bolt
7 terminal apparatus
71, 72, 73 terminal unit
8 groove
9 drawer frame
10 drawer-type circuit breaker body
11 circuit-breaker-side conductor
12 guide
100 drawer-type circuit breaker

## Claims

1. A drawer-type circuit breaker comprising:
a drawer frame (9);
a circuit breaker body (10) which is mountable to the drawer frame (9);
a circuit-breaker-side conductor (11) provided so as to protrude from the circuit breaker body (10); and
a terminal unit (71, 72, 73) detachably provided in the drawer frame (9),
wherein
the terminal unit (71, 72, 73) includes
an insulation base (1),
a drawer-frame-side conductor inserted into the insulation base (1) and fixed in a detachable manner,
a connector (4) engaged with an end of the drawer-frame-side conductor,
the connector (4) being connected to the circuit-breaker-side conductor (11) in an extractable manner, and
a terminal (5a, 5b) provided to another end of the drawer-frame-side wherein an individual terminal unit (71, 72, 73) is provided for each phase, the terminal unit (71, 72, 73) being detachably provided in the drawer frame (9) on a phase-by-phase basis;
**characterized in that**
the circuit breaker body (10) is movable via an extendable guide (12) provided to the drawer frame (9);
one single one-piece insulation base (1) hosting both the drawer-frame-side conductor and the terminal (5a, 5b) is provided for each terminal unit (71, 72, 73), the drawer-frame-side conductor includes a terminal conductor (5) having a terminal (5a, 5b), and a relay terminal conductor (2) having a Y shape at a tip end (2a) thereof, wherein the relay terminal conductor (2) and the terminal conductor (5) are integrally formed and inserted into the insulation base (1) so as to be fixed.

2. The drawer-type circuit breaker according to claim 1, wherein
the drawer-frame-side conductor comprises two drawer-frame-side conductors serving as a power-supply-side terminal and a load-side terminal, which are inserted and fixed in the insulation base (1), and
in the insulation base (1), an air passage (8) is formed between the power-supply-side terminal and the load-side terminal.

## Patentansprüche

1. Ausziehbarer Leistungsschalter, aufweisend:
einen Einschubrahmen (9);
einen Leistungsschalter-Körper (10), der am Einschubrahmen (9) montierbar ist;
einen leistungsschalterseitigen Leiter (11), der so vorgesehen ist, dass er aus dem Leistungsschalter-Körper (10) herausragt; und
eine im Einschubrahmen (9) abnehmbar vorgesehene Anschlusseinheit (71, 72, 73),
wobei die Anschlusseinheit (71, 72, 73) umfasst:
einen Isoliersockel (1),
einen in den Isoliersockel (1) eingesetzten und lösbar befestigten einschubrahmenseitigen Leiter,
einen mit einem Ende des einschubrahmenseitigen Leiters in Eingriff stehenden Verbinder (4), wobei der Verbinder (4) mit dem leistungsschalterseitigen Leiter (11) in einer ausziehbaren Weise verbunden ist, und
einen Anschluss (5a, 5b), der an einem anderen Ende des einschubrahmenseitigen Leiters vorgesehen ist, wobei für jede Phase eine eigene Anschlusseinheit (71, 72, 73) vorgesehen ist, wobei die Anschlusseinheit (71, 72, 73) so in dem Einschubrahmen (9) vorgesehen ist, dass sie Phase für Phase abnehmbar ist;
**dadurch gekennzeichnet, dass**
der Leistungsschalter-Körper (10) über eine ausziehbare Führung (12), die am Einschubrahmen (9) vorgesehen ist, bewegbar ist;
für jede Anschlusseinheit (71, 72, 73) ein einziger einteiliger Isoliersockel (1) vorgesehen ist, der sowohl den einschubrahmenseitigen Leiter als auch den Anschluss (5a, 5b) aufnimmt;
der einschubrahmenseitige Leiter einen Anschlussleiter (5) mit einem Anschluss (5a, 5b) und einen Arbeitskontaktleiter (2) mit einer Y-Form an einem freien Ende (2a) desselben umfasst, wobei der Arbeitskontaktleiter (2) und der Anschlussleiter (5) einstückig ausgebildet sind und zur Befestigung in den Isoliersockel (1) eingesetzt sind.

2. Ausziehbarer Leistungsschalter nach Anspruch 1, wobei
der einschubrahmenseitige Leiter zwei einschubrahmenseitige Leiter umfasst, die als stromversorgungsseitiger Anschluss und als lastseitiger Anschluss dienen, und die in den Isoliersockel (1) eingesetzt und befestigt sind, und im Isoliersockel (1) zwischen dem stromversorgungsseitigen Anschluss und dem lastseitigen Anschluss ein Luftdurchlass (8) ausgebildet ist.

## Revendications

1. Disjoncteur de type tiroir comprenant :
un cadre de tiroir (9) ;
un corps de disjoncteur (10) qui peut être monté sur le cadre de tiroir (9) ;
un conducteur côté disjoncteur (11) disposé de manière à faire saillie depuis le corps de disjoncteur (10) ; et
une unité borne (71, 72, 73) disposée de manière détachable dans le cadre de tiroir (9),
dans lequel
l'unité borne (71, 72, 73) comporte
une base d'isolation (1),
un conducteur côté cadre de tiroir inséré dans la base d'isolation (1) et fixé d'une manière détachable,
un connecteur (4) en prise avec une extrémité du conducteur côté cadre de tiroir, le connecteur (4) étant connecté au conducteur côté disjoncteur (11) d'une manière extractible, et
une borne (5a, 5b) prévue à une autre extrémité du côté cadre de tiroir dans lequel une unité borne individuelle (71, 72, 73) est prévue pour chaque phase, l'unité borne (71, 72, 73) étant disposée de manière détachable dans le cadre de tiroir (9) sur une base phase par phase ;
**caractérisé en ce que**
le corps de disjoncteur (10) est mobile via un guide extensible (12) prévu sur le cadre de tiroir (9) ;
une base d'isolation monobloc unique (1) logeant à la fois le conducteur côté cadre de tiroir et la borne (5a, 5b) est prévue pour chaque unité borne (71, 72, 73),
le conducteur côté cadre de tiroir comporte un conducteur de borne (5) présentant une borne (5a, 5b), et un conducteur de borne de relais (2) présentant une forme en Y au niveau d'une extrémité de sommet (2a) de celui-ci, dans lequel le conducteur de borne de relais (2) et le conducteur de borne (5) sont formés d'un seul tenant et insérés dans la base d'isolation (1) de manière à être fixés.

2. Disjoncteur de type tiroir selon la revendication 1, dans lequel
le conducteur côté cadre de tiroir comprend deux conducteurs côté cadre de tiroir servant de borne côté alimentation électrique et de borne côté charge, qui sont insérés et fixés dans la base d'isolation (1), et
dans la base d'isolation (1), un passage d'air (8) est formé entre la borne côté alimentation électrique et la borne côté charge.
